# EUROPÄISCHE PATENTANMELDUNG

(11) **EP 2 111 959 A2**
(43) Veröffentlichungstag der Anmeldung: **28.10.2009**
(21) Anmeldenummer: 09005707.6
(22) Anmeldetag: 23.04.2009
(51) Int. Cl.: B27N 3/04, C08G 18/76, C08L 97/02, B27N 3/14, B27N 1/00

(54) **Verfahren zur Herstellung von Holzwerkstoffen und Holzwerkstoffe**

(30) Priorität: 24.04.2008 DE 102008020642
(71) Anmelder: Kronotec AG, 6006 Luzern (CH)
(72) Erfinder:
(74) Vertreter: Kröncke, Rolf

(57) **Zusammenfassung**

Die vorliegende Erfindung betrifft Verfahren zur Herstellung von Holzwerkstoffen aus Lignocellulose, wobei diese Holzwerkstoffe eine verminderte Emission von gesättigten und ungesättigten Aldehyden einschließlich Formaldehyd und anderen flüchtigen organischen Verbindungen (VOC) aufweisen. Genauer betrifft die vorliegende Erfindung ein Verfahren zur Herstellung von Holzwerkstoffen, bei denen den Zerkleinerungsprodukten vor dem Verpressen ein Additiv hinzugefügt wird. Dabei handelt es sich bei diesem Additiv um ein Fe (II) Salz und Wasserstoffperoxid.

Die vorliegende Erfindung betrifft außerdem mit diesem Verfahren herstellbare Holzwerkstoffe, insbesondere OSB-Platten und MDF-Platten. Schließlich richtet sich die vorliegende Erfindung auf Zusammensetzungen, die in der Behandlung von Holzwerkstoffen geeignet sind, um die Emission von gesättigten und ungesättigten Aldehyden einschließlich Formaldehyd und flüchtigen organischen Verbindungen zu reduzieren.

## Beschreibung

Die vorliegende Erfindung betrifft Verfahren zur Herstellung von Holzwerkstoffen aus Lignocellulose, wobei diese Holzwerkstoffe eine verminderte Emission von gesättigten und ungesättigten Aldehyden einschließlich Formaldehyd und anderen flüchtigen organischen Verbindungen (VOC) aufweisen. Genauer betrifft die vorliegende Erfindung ein Verfahren zur Herstellung von Holzwerkstoffen, bei denen den Zerkleinerungsprodukten vor dem Verpressen ein Additiv hinzugefügt wird. Dabei handelt es sich bei diesem Additiv um ein Fe (II) Salz und Wasserstoffperoxid.

Die vorliegende Erfindung betrifft außerdem mit diesem Verfahren herstellbare Holzwerkstoffe, insbesondere OSB-Platten und MDF-Platten. Schließlich richtet sich die vorliegende Erfindung auf Zusammensetzungen, die in der Behandlung von Holzwerkstoffen geeignet sind, um die Emission von gesättigten und ungesättigten Aldehyden einschließlich Formaldehyd und flüchtigen organischen Verbindungen zu reduzieren.

### Stand der Technik

Die Emission von flüchtigen organischen Verbindungen (VOC) aus Holzwerkstoffen (HWS) stellt unter dem Aspekt der zunehmenden Nutzung von holzhaltigen Produkten in Innenräumen ein gravierendes Problem dar. Zu den flüchtigen organischen Verbindungen zählen neben den gesättigten und ungesättigten Aldehyden einschließlich Formaldehyd alle flüchtigen organischen Stoffe, deren Retentionszeit im Gaschromatogramm zwischen C6 (Hexan) und C16 (Hexadecan) liegt. Die VOC sind somit keine homogene Substanzklasse, sondern ein Sammelsurium von Verbindungen. Unter anderem sind dieses organische Säuren, gesättigte und ungesättigte Aldehyde, Alkohole, Carbonsäuren, Terpene, aliphatische und aromatische Kohlenwasserstoffe und viele mehr. Der Ausdruck Aldehyde, wie er hier vorliegend verwendet wird, umfasst nicht nur die leicht flüchtigen Verbindungen einschließlich Formaldehyd, sondern auch alle anderen Aldehyde, die in gesättigter oder ungesättigter Form vorliegen können.

Aufgrund dieser Heterogenität ist eine Umwandlung der oben aufgeführten und teilweise toxischen Substanzen durch eine einzige chemische Reaktion schwierig. Im Übrigen sind Reaktionen in der organischen Chemie an das Vorhandensein von funktionellen Gruppen gekoppelt. Das heißt, dass eine chemische Reaktion besonders leicht an einer funktionellen Gruppe ablaufen kann, Dabei gibt es ein breites Spektrum von sehr reaktiven bis hin zu wenig reaktiven funktionellen Gruppen.

Die Verringerung von flüchtigen Holzinhaltstoffen treten aber aufgrund der Verwendung von holzhaltigen Produkten in Innenräumen und einer Sensibilisierung der Verbraucher aber auch aufgrund verschärfter Grenzwerte immer mehr in den Fokus. Auch aus ökologischen Gründen wird die Verwendung von Holz und holzenthaltenden Produkten immer mehr favorisiert.

Die genannten Stoffe und Substanzklassen, die unter dem Ausdruck der flüchtigen organischen Verbindungen subsumiert werden, treten je nach Holzart, Lagerungsdauer/-bedingungen und Weiterverarbeitungsschritten in stark variierenden Mengen auf. Auch die Verwendung, die Einbaubedingungen und die klimatischen Gegebenheiten bei der Nutzung haben Einfluss auf die Art und Menge der Emissionen. Die VOCs können dabei im Wesentlichen aus bereits vorhandenen, aus biologischen/chemischen Abbau entstehenden oder aus durch Bearbeitungsvorgänge sich bildenden Verbindungen bestehen, vor allem im Holz der Nadelbäume finden sich diese Bestandteile in erhöhter Menge wieder.

Das heißt, vor allem Nadelhölzer, aus denen vorwiegend Spanplatten, Mitteldichtefaserplatten (MDF) oder OSB-Platten hergestellt werden, enthalten große Mengen an Harzen und Fetten, die zur Bildung von flüchtigen organischen Terpen-Verbindungen und Aldehyden führen. Teilweise entstehen diese Stoffe auch durch Abbau der Hauptbestandteile des Holzes, wie Lignin, Cellulose und Hemicellulose. Aber auch durch die Verwendung bestimmter Klebstoffe für die Herstellung der Holzwerkstoffe können VOCs einschließlich Aldehyde entstehen. Umwandlungsprodukte, die unter anderem während der Lagerung und der Bearbeitung des Holzes und der Zerkleinerungsprodukte auftreten, sind z. B. Pentanal und Hexanal.

Prinzipiell ist die Umsetzung einzelner oben genannter Substanzklassen der VOCs durch Reagenzien die oxidatives oder reduktives Potenzial besitzen, möglich. Aufgrund der Heterogenität der VOCs in den Holzwerkstoffen ist eine umfassende Reduzierung aber schwierig. Zumal eine Maßnahme, die eine Substanzklasse verringert, möglicherweise eine andere vermehrt oder unbeeinflusst lässt.

Es ist eine allgemein bekannte Tatsache, dass alle Holzwerkstoffe einschließlich Spanplatten, Faserplatten und OSB-Platten sowohl gesättigte und ungesättigte Aldehyde, als auch andere VOC in die Raumluft abgeben. Diese Emissionen beruhen sowohl auf dem chemischen Abbau innerhalb des Holzes als auch durch chemischen Abbau der verwendeten Aldehyd-haltigen Bindemittel. Die anderen VOC Emissionen beruhen dagegen hauptsächlich auf holzbedingte Freisetzungen von sogenannten Primäremissionen von leicht flüchtigen Holzinhaltsstoffen, wie Terpenen oder chemischen Abbauprodukten, wie Essigsäure und sogenannte Sekundär- bzw. Tertiäremissionen, z. B. höhere Aldehyde, wie Pentanal oder höhere Carbonsäuren. Diese Abbauprodukte entstehen durch langandauernde Oxidationsprozesse von Holzinhaltsstoffen, wie Fettsäuren, aber auch Lignin, Cellulose und Hemicellulose.

Dabei bilden die gesättigten oder ungesättigten Aldehyde innerhalb der heterogenen Gruppe der flüchtigen organischen Verbindungen eine besonders kritische Verbindungsklasse, da sie nicht nur toxisch, sondern zum Teil auch karzinogen wirken können. Weiterhin sind sie vom olfaktorischen Aspekt als kritisch einzustufen. Die Aldehyde entstehen unter anderem auch bei der Herstellung von Holzwerkstoffen, wie oben dargestellt, und werden insbesondere von OSB-Platten zeitverzögert durch Fragmentierung von ungesättigten Fettsäuren oder aufgrund der Verwendung von Aldehyd-haltigen Klebstoffen freigesetzt. Gerade für OSB-Platten im konstruktiven Bereich ist dieses von großem Nachteil, da bei dieser Anwendung die OSB-Platten keine emissionsmindernde Beschichtung aufweisen und in großen Mengen insbesondere als Fläche der Platte bezogen auf die Gesamt-Kubikmeterzahl des Raumes oder des Gebäudes, verbaut wird.

Ähnliche Probleme mit einer Aldehydemission können bei dem Einsatz von leichten Holzwerkstoffen, wie leichten und superleichten MDF zur Wärmedämmung, auftreten. Hier emittieren verstärkt Aldehyde, z. B. cyclische Aldehyde, die als einzige Emission problematischer sind. Diese Problematik ergibt sich sowohl durch die Emissionsmenge als auch durch die Toxizität der Verbindungen.

Wie bereits oben ausgeführt, werden auch durch die verwendeten Klebstoffe während der Herstellung oder anschließend während der Verwendung flüchtige organische Verbindungen insbesondere Aldehyde, wie Formaldehyd, freigesetzt. Zu den Klebstoffen, wie sie derzeit in der Herstellung von Holzwerkstoffen, wie OSB-Platten, mitteldichte Faserplatten usw. verwendet werden, zählen Aminoplast-Klebstoffe, wie Harnstoff-Formaldehyd-Klebestoffe (UF-Klebstoffe), Melamin-Harnstoff-Phenol-Formaldehyd-Klebstoffe (MUPF-Klebstoffe) oder Melamin-Harnstoff-Formaldehyd-Klebstoffe (MUF-Klebstoffe). Weitere Klebstoffe, wie sie typischerweise bei Holzwerkstoffen eingesetzt werden, umfassen Klebstoffe auf Basis von Diisocyanaten (PMDI), Polyurethanklebstoffe, Phenol-Formaldehyd-Klebstoffe (PF-Klebstoffe) und/oder Tannin-Formaldehyd-Klebstoffe (TF-Klebstoffe) oder Gemische hiervon. Dabei finden im Faserplattenbereich hauptsächlich Aminoplast-Klebstoffe Verwendung. Hier tritt eine Freisetzung der Aldehyde und anderem VOCs sowohl während der Herstellung der Holzwerkstoffe als auch nach deren Herstellung oder bei ihrer Anwendung statt. Bei der Faserplattenherstellung kann es z. B. bei der thermomechanischen Behandlung der Lignocellulose-haltigen Materialien zu einem chemischen Teilabbau des Holzes kommen. Die dabei entstehenden, leicht flüchtigen Verbindungen, wie Aldehyde und Säuren emittieren dann während des späteren Herstellungsverfahrens oder bei späterer Nutzung der hergestellten Holzwerkstoffe, Sie können ebenfalls einen negativen Einfluss auf die Verklebungsfestigkeit haben und somit die Eigenschaften der hergestellten Holzwerkstoffe negativ beeinflussen.

Es wurden bereits vielfältige Ansätze unternommen, diese Probleme der Emission von flüchtigen organischen Verbindungen, einschließlich der Aldehyde, zu begrenzen. So wird in der EP 1 852 231 die Verwendung von verschiedenen Additiven vorgeschlagen, wie eine Kombination einer starken Säure mit Phenol oder die Verwendung von Maleinsäureanhydrid oder ähnlichen Verbindungen. Der Einsatz von Reduktions- bzw. Oxidationsmitteln ist ebenfalls bekannt. Des Weiteren wird eine Erhöhung des pH-Wertes vorgeschlagen, z. B. durch Zusatz von Alkalihydroxiden.

Aus der WO 2006/032267 sind Verfahren zur Reduktion von ungesättigten Aldehyden in Fettsäure-haltigen Hölzern bekannt. Dabei wird der im Holz enthaltene Fettsäureester gespalten, inhibiert oder oxidiert. Dazu wird allgemein die Verwendung von Antioxidantien, alkalischen Verbindungen oder Oxidationsmitteln vorgeschlagen.

Allerdings besteht nach wie vor ein Bedarf nach Verfahren die Emission von flüchtigen organischen Verbindungen insbesondere auch von Aldehyden aus Holzwerkstoffen zu verringern.

Es war nun Aufgabe der vorliegenden Erfindung, Additive bereit zu stellen, die bereits vorhandene, aber auch sich neu bildende flüchtige organische Verbindungen (VOC) einschließlich gesättigte und ungesättigte Aldehyde in weniger toxische Verbindungen umwandeln, um so die Emission an Aldehyden und anderen VOCs von Holzwerkstoffen zu reduzieren und auf ein niedriges Niveau zu begrenzen. Dabei soll auch die sich aus diesen flüchtigen organischen Verbindungen ergebende Geruchsbelästigung verringert werden. Wichtig ist dabei aber auch zu berücksichtigten, dass keine den Herstellungsprozess der Holzwerkstoffe störenden Substanzen verwendet oder generiert werden. Es ist ebenfalls ein wichtiger Aspekt, dass die Herstellungskosten der Holzwerkstoffe nicht signifikant erhöht werden. Dabei dürfen die eingesetzten Mittel selbst nicht toxisch oder karzinogen wirken, sollen aber möglichst umfangreich mit der heterogenen Klasse der flüchtigen organischen Substanzen reagieren.

### Beschreibung der Erfindung

Die Aufgabe wird dadurch gelöst, dass eine spezielle Zusammensetzung den Lignocellulose-haltigen Zerkleinerungsprodukten zugesetzt wird, um durch Umsetzung mit den flüchtigen organischen Verbindungen einschließlich den gesättigten oder ungesättigten Aldehyden diese so zu verändern, dass die Emission an Aldehyden und VOC insgesamt sowohl während des Herstellungsverfahrens als auch nach der Herstellung verringert sind.

Überraschend konnte festgestellt werden, dass der Einsatz von Additiven, nämlich einem Eisen (II) Salz und Wasserstoffperoxid als Reaktionssystem, die Emission von Aldehyden und anderen VOCs deutlich verringert werden konnte.

Eisen (II) Salz und Wasserstoffperoxid bilden bei Umsetzung miteinander Hydroxyradikale nach der folgenden Reaktionsgleichung (Fenton-Reaktion):

H₂O₂ + Fe (11) →HO (Radikal) + HO⁻ + Fe (III)

Die sich bildenden HO-Radikale stellen eine sehr reaktive Spezies dar, die relativ unspezifisch organische Stoffe angreift und z. B. Wasserstoffradikale aus den Verbindungen abstrahiert und Wasser bildet. Die Fenton-Reaktion ist eine bereits aus dem Ende des 19. Jahrhunderts bekannte durch Eisensalze katalysierte Umsetzung organischer Substrate mit Wasserstoffperoxid. Wie gesagt kann das OH-Radikal spezifisch organische Stoffe angreifen und daraus Wasserstoffradikale abstrahieren. Die Reaktion kann dabei direkt am VOC-Molekül oder durch eine Radikalübertragung von einem anderen organischen Molekül auf das VOC-Molekül erfolgen. Die daraus resultierenden organischen Radikale können dann durch Fragmentierung oder andere radikalische Reaktionen weiter reagieren. Dabei können auch relativ stabile Verbindungen, wie Aromaten zerstört werden. Dieses ist wie Abbauversuche am Aromaten gezeigt haben, mit Wasserstoffperoxid allene nur eingeschränkt oder gar nicht möglich. Gleiches gilt auch für reduzierende Agenzien. Damit kann davon ausgegangen werden, dass es ich bei dem reaktionseinleitenden Schritt nicht um einen Redoxprozess handelt.

Bei dem Fe (II) Salz handelt es sich bevorzugt um Eisensulfat.

Dabei findet die Umsetzung bevorzugt bei einem pH von < 7,0 statt, das heißt im sauren Milieu, bevorzugt bei einem pH von ≤5.0.

Wasserstoffperoxid kann dabei in einem Bereich von 0,1 bis 10 Gew.-% Wasserstoffperoxid auf atro Holz eingesetzt werden, um die gewünschte Wirkung zu erreichen. Das Eisen (II) Salz als Reaktionspartner des Wasserstoffperoxids muss nicht äqulmolar zugegeben werden, eine Dosierung im einstelligen Prozentbereich bezogen auf das Wasserstoffperoxid reicht aus. Das heißt, Eisen (II) Salz wird bevorzugt in einer Menge von 0,001 bis 0,1 Gew.-% Feststoff bezogen auf atro Lignocellulose eingesetzt. Durch parallel ablaufende Redoxprozesse wird das sich nach der oben gezeigten Reaktionsgleichung bildende Eisen (III) Salz immer wieder in Eisen (II) Salz umgewandelt. Damit steht es immer wieder als Elektronenlieferant für die Fenton-Reaktion zur Verfügung.

Das Verhältnis an Eisen (II) Salz zu Wasserstoffperoxid ist dabei bevorzugt im Bereich von 0,01:1 bis 1:1.

Es zeigte sich dabei, dass die Zugabe dieser Additive ausreichend ist, um die gewünschten Effekte zu erzielen.

Der Fenton-Reaktion ähnliche Reaktionen können aber auch unter Beteiligung anderer niedervalenter Metallkomplexe, wie Cu (II), Ti (III), Cr (II) oder Co (II) stattfinden. Das heißt, Ausführungsformen, die andere niedervalente Metallkomplexe enthalten, können erfindungsgemäß ebenfalls in Kombination mit Wasserstoffperoxid eingesetzt werden.

Beim Einsatz des erfindungsgemäßen chemischen Systems bei der Herstellung von Holzwerkstoffen, wie z. B. OSB-Platten, wurde überraschend eine deutliche Reduzierung der Aldehyde festgestellt. Zusätzlich war auch eine deutlich geringere Emission von anderen flüchtigen chemischen Verbindungen zu beobachten. Eine Verringerung der Emission ist sowohl während der Herstellung als auch bei der späteren Verwendung möglich Dies ist umso überraschender als nicht davon ausgegangen werden konnte, dass aufgrund der Vielzahl von reaktiven Verbindungen, die auf Holzoberflächen vorhanden sind, um die potenziell mit den verwendeten Hydroxilradikalen reagieren, diese Additive wirksam VOC und insbesondere die Aldehyde in unproblematische Verbindungen umwandeln können.

Die erfindungsgemäßen Additive können dabei in allen Holzwerkstoffen und zu verschiedensten Zeitpunkten der Produktion eingesetzt werden Bevorzugt findet der Einsatz dabei vor dem Heißverpressen statt.

Die Additive können dabei zum Teil als Pulver oder in Lösung auf die Lignocellulose-haltigen Zerkleinerungsprodukte aufgetragen werden. Das Additiv wird dabei getrennt vom Klebstoff vorher oder nachher zu den Zerkleinerungsprodukten der Lignocellulosen gegeben. So können z. B. bei Strands die Additive nach der Zerspanung oder vor dem Nassspanbunker aufgebracht werden. Bei Fasern ist die Dosierung von den Additiven vor oder nach dem Refiner möglich.

Wässrige Lösungen können bei den Strands nach dem Trocknen oder in der Beleimung aufgebracht werden. Es ist aber auch jede andere Stelle möglich, an der die Stands durch eine Sprühung gut benetzt werden können. Da die Oberflächen in nicht unerheblicher Menge zu der Gesamtemission beitragen, besteht auch die Möglichkeit, auf die bereits vorgestreuten Standkuchen vor der Presse die Additive aufzudüsen.

Die Lösung kann bei der Herstellung aller Holzwerkstoffe zum Einsatz kommen, wobei die Zugabe gemäß dem erfindungsgemäßen Verfahren zweckmäßigerweise über betriebsübliche Anlage zur Klebstoffdosierung, wie Beleimtrommel, Blow-Line Beleimung oder Trockenbeleimung erfolgt. Bei Fasern bietet sich die Verwendung von Lösungen der erfindungsgemäßen Additive in der Blow-Line an.

Bei den Lignocellulosen, wie den Holz- oder den Zerkleinerungsprodukten hiervon kann es sich sowohl um Nadelhölzer als auch um Laubhölzer handeln. Auch Mischungen dieser beiden Holzarten sind möglich. Bevorzugt stammen die Holzspäne, Strands oder Holzfasern von Nadelhölzern. Die mit dem erfindungsgemäßen Herstellungsverfahren herstellbaren Holzwerkstoffe können gemäß bekannten Verfahren hergestellt werden. Dabei können den Verfahren zusätzlich auch andere, dem Fachmann bekannte Verfahren zur Verminderung der Emission von flüchtigen organischen Verbindungen, wie Aldehyden, ergänzt werden.

Bei den Holzwerkstoffen kann es sich bevorzugt um Spanplattenholz aus Holzspänen, OSB-Strands aus Holzstrands, Sperrholzplatten aus Holzfurnier und Holzfaserplatten, insbesondere MDF-Platten, aus Holzfasern handeln. Bevorzugt sind die herzustellenden Holzwerkstoffe OSB-Platten und leichte und superleichte MDF-Platten.

Unter Lignocellulosen werden Lignocellulose-haltige Materialien, wie Holz verstanden. Daraus erhaltene Zerkleinerungsprodukte von Lignocellulose umfassen insbesondere Holzstrands, Holzspäne, Holzfasern auch als Holzfurnier.

Die verwendeten Klebstoffe im erfindungsgemäßen Verfahren umfassen als Klebstoffe einen Phenol-Formaldehyd-Klebstoff (PF-Klebstoff), einen Klebstoff auf Basis von Isocyanaten (PMDI), einen Harnstoff-Formaldehyd-Klebstoff (UF-Klebstoff), einen Melamin-Harnstoff-Formaldehyd-Klebstoff (MUF-Ktebstoff), einen Melamin-Harnstoff Phenol-Formaldehyd-Klebstoff (MUPF-Klebstoff), einen Tannin-Formaldehyd-Klebstoff (TF-Klebstoff) oder ein Gemisch hiervon,

In einem weiteren Aspekt betrifft die vorliegende Erfindung eine Zusammensetzung zur Behandlung von Holzwerkstoffen. Diese Zusammensetzung umfasst Eisen (II) Salze und Wasserstoffperoxid, zur Behandlung von Holzwerkstoffen sowie Lignocellulose-haltigen Zerkleinerungsprodukten hiervon zur Reduktion der Emission von gesättigten oder ungesättigten Aldehyden, insbesondere Formaldehyd und anderen flüchtigen organischen Verbindungen.

Erfindungsgemäß erhältliche Holzwerkstoffe zeichnen sich durch eine verringerte Emission an gesättigten oder ungesättigten Aldehyden und anderen flüchtigen organischen Verbindungen aus.

Im Folgenden wird die Erfindung mit Hilfe von Beispielen näher erläutert, ohne dass sie auf diese beschränkt ist.

### Beispiel 1

### Herstellung von emissionsarmen OSB

Die emissionsarme OSB-Platte und die Referenzprobe ohne Additiv wurden aus identischen Strandmaterial (100% Kiefer) unter identischen Produktionsbedingungen hergestellt. Die Herstellungsparameter waren:
Einschichtige, von Hand gestreute OSB, Presstemperatur 220°C, Pressfaktor 12 s/mm, 200 bar Pressdruck. Die Herstellung der Platten erfolgte unter Verwendung von 5% PMDI (auf atro Strand) als Klebstoff. Den emissionsarmen OSB wurden zusätzlich 1 Gew.-% Wasserstoffperoxid und 0,01 Gew.-% Eisen(II)sulfat (in flüssiger bzw. fester Form) auf atro Strands zugegeben.

### Beispiel 2

### Bestimmung der Emission aus OSB

Die in Beispiel 1 hergestellten OSB-Platten wurden gemäß den folgenden Verfahren auf ihr Emissionsverhalten untersucht:

Die Proben wurden in Prüfkammern (Volumen: V= 23,5 L) eingebracht. Die Prüfkammern wurden mit 3,1 Luftwechseln pro Stunde betrieben. Daraus resultiert eine flächenspezifische Luftdurchflussrate q = 1 m³m⁻²h⁻¹. In Anlehnung an die Vorgaben aller gängigen VOC-Prüfschemata verbleiben die Proben 28 Tage in den Prüfkammern mit normgerechtem Klima (23 °C und 50 % r.Lf.). Die Luftprobenahmen wurden auf Tenax TA durchgeführt mit Probenahmevolumina von 1 bis 2 L.

Die Quantifizierung erfolgt über eine lineare Mehrpunktkalibrierung der entsprechenden Referenzsubstanzen sowie dem relativen Responsefaktor des internen Standards (Toluol_{d8}). Verbindungen, für die kein entsprechender Standard verfügbar war, wurden substanzähnlich quantifiziert (vgl. Tabelle 2). Im Folgenden sind verwendete Geräte und Parameter dargestellt:

**Tabelle 1; Verwendetes GC/MS-System**

| | |
|---|---|
| Thermodesorptionseinheit | TDS 3, Fa. Gerstel, Mühlheim a. d. Ruhr |
| Gaschromatograph | Agilent 6895 |
| Trägergas | Helium |
| Säule | Zebron ZB1701, 30m, 0,25 mm, 025 µm |
| | 14 % Cyanopropylphenyl-methylpolysiloxan |
| KühlfalleKAS, | Glass Liner, gefüllt mit Tenax TA |
| Detektor | Agilent 5973N |
| | 29-400 amu; 3,8 scans s⁻¹ |

| **Thermodesorption** | |
|---|---|
| Starttemperatur | 20 °C |
| Endtemperatur | 280 °C |
| Aufheizrate | 60 °C s⁻¹ |
| Hold | 4 min |
| | |

| | **Kühlfalle** |
|---|---|
| Starttemperatur | -30 °C |
| Endtemperatur | 280 °C |
| Aufheizrate | 12 °C s⁻¹ |
| Hold | 3 min |
| Split-Verhältnis | 1:20 |
| | |

| **Ofenprogramm** | |
|---|---|
| 40 °C, 4 min. halten | |
| 6 °C min⁻¹ bis 90 °C, 4min: halten | |
| 8 °C min⁻¹ bis 200 °C | |
| 12 °C min⁻¹ bis 280 °c; 5 min; halten | |
| Säulenfluss 1,2 ml min.⁻¹ | |

**Tabelle 2: Standards zur Quantifizierung von Nebenkomponenten**

| Verbindung | Standard |
|---|---|
| Terpene | α*-Pinen,* Toluol |
| Aldehyde | Pentanal, Nonanal |
| Ungesättigte Aldehyde | 1-Heptenal |
| Alkohole | 1-Pentanol |
| Sonstige Verbindungen | Toluol (IS) |

Die in der Tabelle 3 dargestellten Ergebnisse zeigen, dass bei den erfindungsgemäß hergestellten OSB-Platten die Emissionswerte für gesättigte und ungesättigte Aldehyde gering sind.

**Tabelle 3**

| Verbindung* | Referenz OSB | OSB mit 1 Gew.-% H₂O₂ + 0,01 Gew.-% Eisensulfat | OSB mit 1,5 Gew.-% H₂O₂ + 0,01 Gew.-% Eisensulfat |
|---|---|---|---|
| Pentanal | 31,2 | 9,8 | 10,4 |
| Hexanal | 272,1 | 75,4 | 10,4 |
| Octanal | 4,7 | n.b. | n.b. |
| Nonanal | 3,4 | n.b. | n.b. |
| 2-Heptanal | 6,7 | n.b. | n.b. |
| 2-Octenal | 13,6 | 3,9 | 4,1 |

| | | | |
|---|---|---|---|
| *Messwerte nach 28 Tagen in µg/m³, n.b. nicht bestimmbar | | | |

Wie aus den Beispielen deutlich wird, ist es erfindungsgemäß möglich, die Aldehyd-Emissionen gegenüber der Referenzprobe deutlich mit Hilfe der erfindungsgemäßen Zusammensetzung zu verringern. Des Weiteren waren auch eine Verringerung der Terpene als auch der VOC insgesamt gegenüber der Referenzprobe zu beobachten.

Die so erhaltenen Holzwerkstoffe zeichnen sich auch im späteren Gebrauch durch verringerte Aldehyde und geringe VOC Emissionen aus.

## Patentansprüche

1. Verfahren zur Herstellung von Holzwerkstoffen aus Lignocellulose, wobei die Holzwerkstoffe aus Lignocellulose-haltigen Zerkleinerungsprodukten mit Klebstoffen unter Wärmebehandlung verpresst werden, **dadurch gekennzeichnet, dass** den Zerkleinerungsprodukten vor dem Verpressen weiterhin mindestens ein Additiv zugesetzt wird, wobei dieses Additiv ein Fe (II) Salz und Wasserstoffperoxid umfasst, zur Verminderung der Emission von gesättigten und ungesättigten Aldehyden einschließlich Formaldehyd und anderen flüchtigen organischen Verbindungen.

2. Verfahren nach Anspruch 1, **dadurch gekennzeichnet, dass** das Fe (II) Salz Eisen(II)sulfat ist.

3. Verfahren nach einem der Ansprüche 1 oder 2, **dadurch gekennzeichnet, dass** der pH-Wert der Zerkleinerungsprodukte ≤ pH 7,0 ist, insbesondere der pH-Wert ≤ 5,0 ist.

4. Verfahren nach zumindest einem der Ansprüche 1 bis 3, wobei Wasserstoffperoxid in einer Menge von 0,1 bis 10 Gew.-% bezogen auf atro Lignocellulose hinzugefügt wird.

5. Verfahren nach zumindest einem der vorherigen Ansprüche, wobei das Fe (II) Salz in einer Menge von 0,001 bis 0,1 Gew.-% Feststoff bezogen auf atro Lignocellulose hinzugefügt wird.

6. Verfahren nach zumindest einem der vorherigen Ansprüche, wobei das Verhältnis an Fe (II) Salz: Wasserstoffperoxid im Bereich von 0,01:1 bis 1:1 liegt.

7. Verfahren nach zumindest einem der vorherigen Ansprüche, **dadurch gekennzeichnet, dass** die Holzwerkstoffe solche sind, hergestellt aus Holzspäne, Holzstrands, Holzfasern und Holzfurnieren und/oder die Holzwerkstoffe Holzplatten sind, insbesondere Spanplatten, Faserplatten und OSB-Platten, besonders bevorzugt OSB-Platten aus Holzstrands.

8. Verfahren nach zumindest einem der vorherigen Ansprüche, **dadurch gekennzeichnet, dass** das Additiv vor oder nach dem Klebstoff zu den Zerkleinerungsprodukten der Lignocellulose hinzugegeben wird.

9. Verfahren nach zumindest einem der vorherigen Ansprüche, **dadurch gekennzeichnet, dass** der verwendete Klebstoff ein Phenol-Formaldehyd-Klebstoff, ein Klebstoff auf Basis von Diisocyanaten, ein Harnstoff-Formaldehyd-Klebstoff, ein Melamin-Harnstoff-Formaldehyd-Klebstoff, ein Melamin-Harnstoff-Phenol-Formaldehyd-Klebstoff, ein Tannin-Formaldehyd-Klebstoff oder Gemisch hiervon ist.

10. Verfahren nach zumindest einem der vorherigen Ansprüche, **dadurch gekennzeichnet, dass** das Fe (II) Salz in Form eines Feststoffes oder in flüssiger Form aufgebracht wird.

11. Verfahren nach zumindest einem der vorherigen Ansprüche, weiterhin umfassend den Schritt des Heißverpressens der mit Klebstoff und mit Additiv vermischten Zerkleinerungsprodukte der Lignocellulosen.

12. Verfahren nach zumindest einem der vorherigen Ansprüche, **dadurch gekennzeichnet, dass** das Aufbringen des Additivs nach der Zerspanung oder vor dem Nassspanbunker im Fall von Holzstrands als Lignocellulose-haltige Zerkleinerungsprodukte erfolgt.

13. Verfahren nach zumindest einem der vorherigen Ansprüche, **dadurch gekennzeichnet, dass** das Additiv auf die gestreuten Strand- oder Faserkuchen als wässrige Lösung aufgebracht wird.

14. Holzwerkstoff erhältlich mit einem Verfahren gemäß einem der Ansprüche 1 bis 13, wobei es sich bevorzugt um OSB-Platten oder Faserplatten, insbesondere leichte und superleichte MDF-Platten handelt.

15. Zusammensetzung zur Behandlung von Holzwerkstoffen zur Reduktion der Emission von gesättigten und ungesättigten Aldehyden einschließlich Formaldehyd und anderen flüchtigen organischen Verbindungen umfassend mindestens ein Fe (II) Salz und Wasserstoffperoxid.
